# EUROPÄISCHE PATENTANMELDUNG

(11) **EP 4 199 313 A1**
(43) Veröffentlichungstag der Anmeldung: **21.06.2023**
(21) Anmeldenummer: 22209310.6
(22) Anmeldetag: 24.11.2022
(51) Int. Cl.: H02K 3/38, H02K 5/08, H02K 9/22, H02K 1/18, H02K 7/116, H02K 7/00, B60K 7/00, B60K 1/02

(54) **ANTRIEBSACHSENANORDNUNG FÜR EIN ELEKTRISCH ANGETRIEBENES FLURFÖRDERZEUG**

(30) Priorität: 14.12.2021 DE 102021133129
(71) Anmelder: Jungheinrich Aktiengesellschaft, 22047 Hamburg (DE)
(72) Erfinder: ZEIDLER, Christoph, Landshut (DE); HASLBERGER, Johannes, St. Wolfgang (DE); STEINBERGER, Wolfgang, Moosburg (DE); MERTKE, Sergej, Landshut (DE)
(74) Vertreter: Herzog, Markus

(57) **Zusammenfassung**

Die vorliegende Erfindung betrifft eine Antriebsachsenanordnung (10) für ein elektrisch angetriebenes Flurförderzeug, umfassend ein tragendes Achsgehäuse (12) mit jeweiligen Anbindungsteilen (14, 16) an einen Fahrzeugrahmen sowie ein Hubgerüst des Flurförderzeugs, wenigstens einen in einer entsprechenden Ausnehmung (18) des Achsgehäuses (12) als Strukturbauteil integrierten Stator (24) eines Fahrantriebs (20) und wenigstens einen entsprechenden Rotor (22) des Fahrantriebs (20), welcher wiederum auf einen Radantrieb (20a) zum Antreiben eines Antriebsrads wirkt, wobei die Wickelköpfe (24a, 24b) des wenigstens einen Stators (24) derart mit einer Vergussmasse (28) vergossen sind, dass eine Verbindung zwischen den Wickelköpfen (24a, 24b) und einer Innenfläche des Achsgehäuses (12) geschaffen ist.

## Beschreibung

Die vorliegende Erfindung betrifft eine Antriebsachsenanordnung für ein elektrisch angetriebenes Flurförderzeug sowie ein elektrisch angetriebenes Flurförderzeug, umfassend eine derartige Antriebsachsenanordnung.

Durch die immer höheren Anforderungen, die an elektrisch angetriebene Flurförderzeuge gestellt werden, steigt die Leistung dieser Geräte in der letzten Zeit drastisch an. Insbesondere bei Einsatzszenarien, bei denen verbrennungsmotorisch angetriebene Flurförderzeuge durch elektrisch angetriebene ersetzt werden sollen, sind häufig besonders hohe Leistungen gefordert. Dies stellt insbesondere in Hinblick auf das Antriebssystem derartiger Flurförderzeuge eine große Herausforderung bezüglich ihrer thermischen Stabilität dar.

Derartige Fahrantriebe für elektrisch angetriebene Flurförderzeuge bestehen meist aus einer tragenden strukturellen Antriebsachse mit einer jeweiligen Anbindung zu einem Hubgerüst und zu einem Fahrzeugrahmen des Fahrzeugs, über welche die an dem Hubgerüst angreifenden und in dem Fahrzeugrahmen wirkenden Kräfte eingeleitet werden, um über an der Antriebsachsenanordnung befestigte Räder am Boden abgestützt zu werden. In diese Antriebsachsen sind dann in geeigneter Weise elektrische Antriebseinheiten mit jeweiligen Statoren und Rotoren integriert, die direkt oder indirekt auf die Räder wirken.

Hierbei besitzt der jeweilige wenigstens eine Stator der entsprechenden bekannten Fahrantriebe kein eigenes Motorgehäuse, sondern ist in der Antriebsachse als Strukturbauteil integriert, wobei der wenigstens eine Stator selbst ebenfalls zur Steifigkeit der Antriebsachsenanordnung beitragen kann. Durch diese Integration des wenigstens einen Stators einschließlich seiner Statorwicklung in die Achse bzw. das Umschließen des wenigstens einen Stators von der Achse ist die Abgabe der im Stator während eines Betriebs davon erzeugten Wärme schwierig. Insbesondere zeigt sich, dass die Wärmeübertragung zwischen den Wickelköpfen der Statorwicklung und dem Achsgehäuse nicht optimal ist, da die Wickelköpfe des wenigstens einen Stators in bekannten derartigen Anordnungen konstruktionsbedingt keinen Kontakt zum Achsgehäuse haben und demzufolge lediglich von Luft umgeben sind, was zu einem schlechten Abtransport der entstehenden Wärme führt.

Weiterhin ist bekannt, derartige elektrische Maschinen zwangszukühlen, beispielsweise mittels von einem Gebläse verteilter Luft oder mittels einer Kühlflüssigkeit, welche im Bereich der sich erwärmenden Komponenten zirkuliert wird. Durch die oben angesprochene Bauweise, welche üblicherweise in Antriebsachsenanordnungen von elektrisch angetriebenen Flurförderzeugen eingesetzt worden ist, ist jedoch ohnehin die Effizienz einer Luft- oder Wasserkühlung relativ gering.

Ferner ist ebenfalls bereits der Ansatz verfolgt worden, bei einem Erreichen einer Grenztemperatur bestimmter Komponenten der Antriebsvorrichtung die zur Verfügung zu stellende maximale Leistung zu drosseln, was jedoch im konkreten Anwendungsfall von elektrisch angetriebenen Flurförderzeugen keine wünschenswerte Lösung ist.

Es ist demzufolge die Aufgabe der vorliegenden Erfindung, eine Antriebsachsenanordnung für ein elektrisch angetriebenes Flurförderzeug bereitzustellen, welche verbesserte thermische Eigenschaften verglichen mit aus dem Stand der Technik bekannten Anordnungen aufweist.

Hierbei umfasst die erfindungsgemäße Antriebsachsenanordnung ein tragendes Achsgehäuse mit jeweiligen Anbindungsteilen an einen Fahrzeugrahmen sowie ein Hubgerüst des Flurförderzeugs, wenigstens einen in einer entsprechenden Ausnehmung des Achsgehäuses als Strukturbauteil integrierten Stator eines Fahrantriebs und wenigstens einen entsprechenden Rotor des Fahrantriebs, welcher wiederum auf einen Radantrieb zum Antreiben eines Antriebsrads wirkt, wobei die Wickelköpfe des wenigstens einen Stators derart mit einer Vergussmasse vergossen sind, dass eine Verbindung zwischen den Wickelköpfen und einer Innenfläche des Achsgehäuses geschaffen ist.

Zwar ist prinzipiell bekannt, in Elektromotoren Wickelköpfe mit einer geeigneten Substanz zu vergießen, jedoch bilden die Motorgehäuse derartiger bekannter Motoren keine tragenden Strukturbauteile mit entsprechenden Anbindungen, über welche sehr hohe Kräfte geleitet werden können, was jedoch bei der vorliegenden Anordnung und dem konkreten Anwendungsfall eines elektrisch angetriebenen Flurförderzeugs der Fall ist. Ebenso bietet die erfindungsgemäße Anordnung durch ihre massive Bauweise mit einem tragenden Achsgehäuse eine höhere Wärmekapazität und eine große Oberfläche, was wiederum zu besseren Eigenschaften bzgl. einer Wärmeabgabe an die Umgebung davon führt.

Demzufolge können durch die erfindungsgemäße Antriebsachsenanordnung die Nachteile des Stands der Technik ausgeräumt werden, indem beispielsweise auf eine aktive Kühlung verzichtet werden kann, welche einerseits aufwendig zu konstruieren und mit einem hohen Energieverbrauch behaftet ist und welche andererseits das allgemeine Akustikverhalten eines Antriebs verschlechtert.

Insbesondere kann in der erfindungsgemäßen Antriebsachsenanordnung die entsprechende Ausnehmung des Achsgehäuses im Bereich der Wickelköpfe durch die Vergussmasse im Wesentlichen vollständig ausgefüllt sein, was sowohl zu optimalen thermischen Eigenschaften als auch zu einer verbesserten strukturellen Festigkeit der gesamten Anordnung führt.

Weiterhin kann das erfindungsgemäße Achsgehäuse bzgl. einer zentralen Längsebene im Wesentlichen symmetrisch ausgebildet sein und zwei Statoren in symmetrischer Weise integriert enthalten. Eine derartige Ausgestaltung mit einem hohen Grad an Symmetrie führt zu verbesserten Eigenschaften der Antriebsachsenanordnung hinsichtlich der oben angesprochenen Ableitung von Kräften aus dem Hubgerüst sowie dem Fahrzeugrahmen.

Wie bereits weiter oben angedeutet, kann in der erfindungsgemäßen Antriebsachsenanordnung der wenigstens eine Stator frei von einem eigenen Gehäuse sein, sodass er lediglich von dem tragenden Achsgehäuse umgeben ist. Hierbei kann der wenigstens eine Stator im Wesentlichen vollumfänglich von dem Achsgehäuse umgeben sein, wodurch er von Umwelteinflüssen abgeschirmt und vor Beschädigungen geschützt ist.

Während die Wahl des konkreten Materials der Vergussmasse unter Berücksichtigung sowohl seiner thermischen als auch mechanischen Eigenschaften vorgenommen werden kann, so zeigt es sich, dass es zur Vermeidung von Spannungen in der erfindungsgemäßen Anordnung vorteilhaft ist, wenn die Vergussmasse und das Material des Achsgehäuses eine ähnliche Wärmeausdehnung und/oder einen ähnlichen Elastizitätsmodul aufweisen. Ebenfalls ist es erfindungsgemäß bevorzugt, eine Vergussmasse mit elektrisch isolierenden Eigenschaften auszuwählen, wobei es sich bei der Vergussmasse beispielsweise um ein aushärtendes Harz handeln kann.

Wie ebenfalls bereits weiter oben angedeutet, betrifft die vorliegende Erfindung ebenfalls ein elektrisch angetriebenes Flurförderzeug, welches einen Fahrzeugrahmen, ein Hubgerüst sowie eine Antriebsachsenanordnung der eben beschriebenen erfindungsgemäßen Art umfasst.

Weitere Merkmale und Vorteile der vorliegenden Erfindung werden aus der nachfolgenden Beschreibung einer Ausführungsform davon noch deutlicher, wenn diese gemeinsam mit den beiliegenden Figuren betrachtet wird. Diese zeigen im Einzelnen:
- Figur 1: eine Querschnittsansicht einer Ausführungsform einer erfindungsgemäßen Antriebsachsenanordnung; und
- Figur 2: eine vergrößerte Ansicht der Antriebsachsenanordnung aus Figur 1 im Bereich eines der Statoren davon.

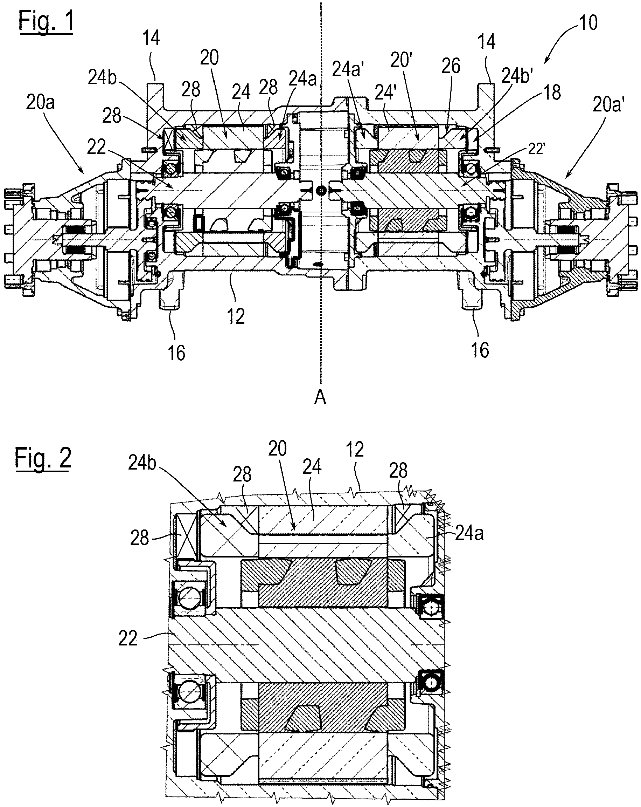

In Figur 1 ist zunächst einmal in einer Querschnittsansicht eine Antriebsachsenanordnung für ein nicht weiter dargestelltes, elektrisch angetriebenes Flurförderzeug gezeigt, welche bezüglich einer zentralen Längsebene A im Wesentlichen symmetrisch aufgebaut ist.

Hierbei sei darauf hingewiesen, dass zur Verdeutlichung der vorliegenden Erfindung die in Figur 1 links dargestellte Hälfte einer Ausführungsform einer erfindungsgemäßen Antriebsachsenanordnung entspricht, während die rechte Hälfte einer Antriebsachsenanordnung aus dem Stand der Technik entspricht. Demzufolge könnte eine vollständig erfindungsgemäß aufgebaute Antriebsachsenanordnung beispielsweise durch eine Spiegelung der in Figur 1 links dargestellten Hälfte an der Längsebene A erhalten werden.

Die Antriebsachsenanordnung aus Figur 1 ist ganz allgemein mit dem Bezugszeichen 10 bezeichnet und umfasst ein tragendes Achsgehäuse 12 mit Anbindungsteilen 14 an einen nicht weiter dargestellten Fahrzeugrahmen des entsprechenden Flurförderzeugs sowie Anbindungsteilen 16 an ein ebenfalls nicht dargestelltes Hubgerüst des Flurförderzeugs. Hierbei sind in dem Achsgehäuse 14 zwei symmetrisch angeordnete Ausnehmungen 18 vorgesehen, welche jeweils einen Fahrantrieb 20 bzw. 20' beherbergen.

In diesem Zusammenhang bezieht sich das Bezugszeichen 20 auf die erfindungsgemäße Ausgestaltung auf der linken Seite von Figur 1, während sich das Bezugszeichen 20' auf das Vergleichsbeispiel aus dem Stand der Technik auf der rechten Seite der Figur 1 bezieht. Die beiden Fahrantriebe 20 und 20' wirken in gleicher Weise jeweils auf einen Radantrieb 20a, 20a' eines entsprechenden (nicht dargestellten) Antriebsrads des Flurförderzeugs, wobei die Radantriebe 20a, 20a' beispielsweise ein Getriebe und ähnliches umfassen können und zu diesem Zweck mit Rotoren 22 bzw. 22' der Fahrantriebe 20, 20' gekoppelt sind. Die genannten Rotoren 22, 22' bilden zusammen mit entsprechenden Statoren 24, 24' die Fahrantriebe 20 und 20', welche in üblicher Weise zum Antreiben des Flurförderzeugs verwendet werden.

Hierbei ist in Figur 1 zu erkennen, dass der rechts dargestellte Stator 24' im Bereich seiner Wickelköpfe 24a' und 24b' von lediglich mit Luft gefüllten Hohlräumen umgeben ist, welche gemeinschaftlich mit dem Bezugszeichen 26 bezeichnet sind und welche weder zu einer tragenden Struktur noch in einer geeigneten Weise zu einem Abtransport von in dem Stator 24' während seines Betriebs entstehender Wärme beitragen können.

Demhingegen ist der in Figur 1 links dargestellte Stator 24 im Bereich seiner Wickelköpfe 24a und 24b derart mit einer Vergussmasse 28 vergossen, dass eine Verbindung zwischen den Wickelköpfen 24a, 24b und einer Innenfläche des Achsgehäuses 12 geschaffen ist, wodurch die Wärmeübertragung über die Wickelköpfe 24a, 24b an das Achsgehäuse 12 und damit an die Umgebung vereinfacht sowie die strukturelle Festigkeit der gesamten Antriebsachsenanordnung 10 in diesem Bereich verbessert ist.

Zur Verdeutlichung dieses Vergießens des Stators 24 innerhalb der entsprechenden Ausnehmung 20 in dem Achsgehäuse 12 sei auch noch einmal auf Figur 2 verwiesen, welche einen entsprechenden Ausschnitt aus Figur 1 in eine Detailansicht erneut wiedergibt. Hierbei zeigt sich, dass die entsprechenden Ausnehmungen 20 im Bereich der Wickelköpfe 24a und 24b durch die Vergussmasse 28 im Wesentlichen vollständig ausgefüllt sind, sodass keine die Wärmeübertragung verschlechternden oder die strukturelle Festigkeit mindernden Lufttaschen mehr verbleiben.

## Patentansprüche

1. Antriebsachsenanordnung (10) für ein elektrisch angetriebenes Flurförderzeug, umfassend:
- ein tragendes Achsgehäuse (12) mit jeweiligen Anbindungsteilen (14, 16) an einen Fahrzeugrahmen sowie ein Hubgerüst des Flurförderzeugs;
- wenigstens einen in einer entsprechenden Ausnehmung (18) des Achsgehäuses (12) als Strukturbauteil integrierten Stator (24) eines Fahrantriebs (20); und
- wenigstens einen entsprechenden Rotor (22) des Fahrantriebs (20), welcher wiederum auf einen Radantrieb (20a) zum Antreiben eines Antriebsrads wirkt;
wobei die Wickelköpfe (24a, 24b) des wenigstens einen Stators (24) derart mit einer Vergussmasse (28) vergossen sind, dass eine Verbindung zwischen den Wickelköpfen (24a, 24b) und einer Innenfläche des Achsgehäuses (12) geschaffen ist.

2. Antriebsachsenanordnung (10) nach Anspruch 1,
wobei die entsprechende Ausnehmung (18) im Bereich der Wickelköpfe (24a, 24b) durch die Vergussmasse (28) im Wesentlichen vollständig ausgefüllt ist.

3. Antriebsachsenanordnung (10) nach Anspruch 1 oder 2,
wobei das Achsgehäuse (12) bezüglich einer zentralen Längsebene (A) im Wesentlichen symmetrisch ausgebildet ist und zwei Statoren (24) in symmetrischer Weise integriert sind.

4. Antriebsachsenanordnung (10) nach einem der vorhergehenden Ansprüche,
wobei der wenigstens eine Stator (24) frei von einem eigenen Gehäuse ist.

5. Antriebsachsenanordnung (10) nach einem der vorhergehenden Ansprüche,
wobei der wenigstens eine Stator (24) im Wesentlichen vollumfänglich von dem Achsgehäuse (12) umgeben ist.

6. Antriebsachsenanordnung (10) nach einem der vorhergehenden Ansprüche,
wobei die Vergussmasse (28) und das Material des Achsgehäuses (12) eine ähnliche Wärmeausdehnung und/oder einen ähnlichen Elastizitätsmodul aufweisen.

7. Antriebsachsenanordnung (10) nach einem der vorhergehenden Ansprüche,
wobei die Vergussmasse (28) elektrisch isolierend ist.

8. Antriebsachsenanordnung (10) nach einem der vorhergehenden Ansprüche,
wobei die Vergussmasse (28) durch ein aushärtendes Harz gebildet ist.

9. Elektrisch angetriebenes Flurförderzeug, umfassend einen Fahrzeugrahmen, ein Hubgerüst und eine Antriebsachsenanordnung (10) nach einem der vorhergehenden Ansprüche.
